# EUROPÄISCHE PATENTSCHRIFT

(11) **EP 2 138 233 B1**
(45) Veröffentlichungstag und Bekanntmachung des Hinweises auf die Patenterteilung: **20.10.2010**
(21) Anmeldenummer: 08010082.9
(22) Anmeldetag: 02.06.2008
(51) Int. Cl.: B01L 3/00, F04B 43/04, F16K 99/00

(54) **Mikrofluidische Folienstruktur zum Dosierren von Flüssigkeiten**
Microfluid film structure for metering liquids
Structure de feuille microliquide destinée au dosage de liquides

(43) Veröffentlichungstag der Anmeldung: 30.12.2009
(73) Patentinhaber: Boehringer Ingelheim microParts GmbH, 44227 Dortmund (DE)
(72) Erfinder: Kurowski, Dirk Dr., 58285 Gevelsberg (DE); Blankenstein, Gert Dr., 44141 Dortmund (DE); Hempel, Mario, 44267 Dortmund (DE); Rodenfels, Tobias, 44265 Dortmund (DE)

(56) Entgegenhaltungen:
- EP-A- 0 594 260
- WO-A-97/10435
- WO-A-2004/074829
- WO-A-2007/029132
- FR-A- 2 795 476
- US-A1- 2002 047 003
- US-A1- 2002 166 585
- US-A1- 2002 168 278
- US-A1- 2006 076 068
- US-B1- 6 293 012

## Beschreibung

Die vorliegende Erfindung betrifft eine Struktur zum Dosieren einer Flüssigkeit in einem mikrofluidischen Netzwerk gemäß dem Oberbegriff des Anspruchs 1 sowie ein Verfahren zum Herstellen einer derartigen Struktur.

Die vorliegende Erfindung befasst sich insbesondere mit solchen mikrofluidischen Strukturen und Vorrichtungen, die den Kapillareffekt oder Druckdifferenzen zum Leiten einer Flüssigkeit nutzen und bei denen zumindest ein Teil der mikrofluidischen Strukturen aus Kammern und/oder Kanälen besteht, die durch eine Folie oberhalb eines plattenförmigen Substrats gebildet werden.

Aus dem Stand der Technik sind Ventilstrukturen bekannt, bei denen eine elastische Membran zum Öffnen und/oder Schließen eines mikrofluidischen Ventils verwendet wird.

So offenbart die US 2005/0205816 A1 ein Ventil für mikrofluidische Strukturen, insbesondere zum Steuern des Flusses in einem mikrofluidischen Kanal, bei dem durch eine flexible Membran, die über einem Teilstück des Flusskanals angeordnet ist, der Fluss unterbrochen werden kann. Hierzu wird Druckluft an eine an die Membran angrenzende Kammer angelegt und die Membran dabei derart ausgelenkt, dass die Membran sich in den Kanalweg legt und diesen verschließt.

Die US 5,811,291 beschreibt ein mikrofluidisches Device, dass durch aneinander Laminieren zweier Polymerfolien, insbesondere PE-Folien hergestellt wird. Hierbei werden die Folien unter Druck- und Hitzeeinwirkung bereichsweise miteinander verbunden, so dass sich in unverbundenen Laminierbereichen durch Einleiten von Flüssigkeit Kammern und Kanäle ausbilden können. Gegenstand der US 5,811,291 ist insbesondere eine Kuvette.

Die US 2006/0076068 A1 offenbart eine mikrofluidische Pumpe und ein mikrofluidisches Ventil sowie ein Verfahren zu deren Herstellung, wobei das Ventil durch eine Membran gebildet wird, die Kanalstrukturen in einem Trägermaterial überdeckt. Das Ventil wird hergestellt, indem eine selektive Laminierung angewendet wird, wobei im Ventilbereich die Membran unbefestigt bleibt.

Die US 2006/0057030 A1 offenbart eine mikrofluidische Einrichtung, ein sogenanntes MEMS device zum Transport von Flüssigkeiten aus einem Reservoir, wobei das Flüssigkeitsreservoir in eine Basisplatte eingeformt ist. Die Basisplatte mit dem Reservoir und mit einem Kanal als flüssigkeitsleitende Strukturen wird von einer ersten Polymerfolie abgedeckt. Die erste Polymerfolie weist Öffnungen zum Reservoir und zum Kanal auf. Eine weitere zweite Polymerfolie ist auf der ersten Polymerfolie angeordnet, wobei die zweite Folie partiell ausgewölbt ist, so dass durch die Wölbung Kammern gebildet werden. Diese Kammern sind fluidisch voneinander getrennt und mit Luft gefüllt, wobei durch ausreichende Druckausübung z.B. durch Zusammenpressen der Kammern Trennstellen zwischen der ersten und der zweiten Folie aufbrechen und die komprimierte ausströmende Luft mittels der Öffnungen die Flüssigkeit aus dem Reservoir in den Kanal verdrängt.

Die US 6,902,706 B1 offenbart ein Ventil zur Steuerung einer Flüssigkeit in einem Analysechip. Das Ventil umfasst eine Folie, die Kanalenden in einem Träger abdeckt. Die Folie ist im Bereich der Kanalenden kuppelartig gewölbt und verbindet durch diese kuppelartige Kammer die Kanalenden. Mittels eines pneumatischen konischen Aktuators kann die Kuppel abgesenkt werden, wodurch das Ventil geschlossen wird.

Die US 2005/0037471 A1 beschreibt ein Verfahren zur Herstellung eines mikrofluidischen Ventils oder einer mikrofluidischen Pumpe, bei dem ein erster Kanal in einer ebenen elastomeren Kunststoffplatte abgeformt wird. Von einem zweiten Werkzeug wird ein zweiter Kanal in einer zweiten Elastomerschicht abgeformt. Die erste Platte wird mit der Kanalseite auf die ebene und plane Oberfläche der zweiten Schichtplatte aufgesetzt und mit dieser verbunden.
Die untere Platte wird dann mit den noch offenen zweiten Kanälen auf ein ebenes und planes Trägersubstrat wie beispielsweise auf eine Glasplatte aufgesetzt. Eine durch den ersten Kanal geleitete Flüssigkeit kann die am Kreuzungspunkt der ersten und zweiten Kanäle durch das elastemere Trennmaterial gebildete Membran auslenken und wirkt dadurch als Ventil.

Die US 2005102058816 A1 offenbart ein mikrofluidisches Membranventil. Hierbei wird eine flexible Membran verwendet, die oberhalb eines Flusskanals angeordnet ist. Durch Einleiten eines pneumatischen Druckes oder eines Vakuums in eine Kammer, die sich an die Membran anschließt, wird die Membran ausgelenkt und verschließt den Flusskanal oder gibt den Flusskanal frei.

Die US 6,293,012 B1 offenbart ein Verfahren zum Verbinden von Polyimidfolien unter Druck und Temperatureinwirkung. Beim Verbinden wird ein Bereich einer Folie durch Anlegen eines Unterdruckes an diesen Bereich in eine Kavität gezogen, so dass dort keine Befestigung stattfindet.

Um Ventilstrukturen oder Dosierelemente gemäß den vorab behandelten Offenbarungen zu erhalten, ist meist vorgesehen, durch Verformung einer Elastomerfolie oder einer elastomeren Kunststoffplatte Kanalstrukturen abzuformen.
Nachteilig müssen daher die abzuformenden Konturen hochgenau in eine Abformmatrizze eingebracht werden. Die Herstellung solcher dreidimensional mikrostrukturierter Matrizen ist kostenaufwendig.

Zudem können mechanische Bearbeitungstechniken zur Herstellung derartiger Matrizen derzeit nur bis zu einer bestimmten Mindest-Strukturgröße eingesetzt werden. Strukturen mit Abmessungen deutlich unterhalb eines Mikrometers benötigen phototechnische Verfahren zur Matrizzenherstellung, was die Matrizenkosten noch weiter erhöht.

Es ist daher eine Aufgabe der Erfindung, ein Herstellverfahren und mikrofluidische Strukturen nach diesem Herstellverfahren anzugeben, die kostengünstig hergestellt werden können.

Eine weitere Aufgabe der Erfindung ist es, ein alternatives Verfahren zur Herstellung von mikrofluidischen Strukturen mit Strukturgrößen im Nanometerbereich oder einstelligen Mikrometerbereich anzugeben, sowie derartige Strukturen mit verbesserten fluidleitenden Eigenschaften bereit zu stellen.

Nach dem Stand der Technik wird ein Ventil meist durch ein Element gebildet, bei dem eine elastische Membran auf fluidleitenden Strukturen in einem Trägersubstrat aufliegt und diese Fluidkanäle im relaxiertem Zustand verschließt.

Durch das Aufbringen von innerem Druck auf die Flüssigkeit oder durch von außen angelegten Druck auf den Ventilkörper wird die Membran ausgelenkt und gibt den Fluidweg frei.
Weiterhin ist es bekannt, fluidleitende Strukturen in ein elastisches Plattenmaterial abzuformen und das so erhaltene Fluidnetzwerk auf ein ebenes Substrat aufzusetzen. Um derartige Kanäle gezielt zu aktuieren und anzusteuern werden ein oder mehrere Kanalsysteme übereinander geschichtet und beispielsweise pneumatisch oder hydraulisch gedehnt, wodurch Kanäle in einer anderen Ebene geöffnet oder geschlossen werden.
Um derartige Fluidnetzwerke bereitzustellen, sind meist aufwendige und kostenintensive Struktürienrngstechniken notwendig.

Vor diesem Hintergrund stellt sich die Aufgabe, ein einfaches Herstellverfahren für derartige Strukturen anzugeben, dass keine Vorstrukturierung von Substraten, Folien oder Membranen benötigt und es erlaubt ein Fluidventil in einem Arbeitsschritt zu fertigen.

Weiterhin ist es eine Aufgabe der Erfindung, die Aktuierung von mikrofluidischen Stellgliedern wie Ventilen zu vereinfachen, um so ein passives mikrofluidisches Stellelement mit verbesserten Eigenschaften zur Leitung von Flüssigkeiten zu realisieren.

Die obigen Aufgaben werden durch ein mikrofluidisches Strukturelement gemäß Anspruch 1 und ein Verfahren zur Herstellung einer derartigen mikrofluidischen Struktur nach Anspruch 28 gelöst.

Erfindungsgemäß ist vorgesehen, eine ebene Folie auf ein ebenes Substrat, einen Träger aufzubringen, insbesondere auf diesen Träger zu siegeln.

Das Siegeln, insbesondere Laminieren erfolgt dadurch, dass der Träger und die Folie übereinander gelegt werden. Dann wird zum Laminieren eine Maske (beheizter Stempel) auf die Folie aufgesetzt. Die Maske weist eine Ausnehmung oder Durchbrechung auf, wobei im Bereich der Ausnehmung oder Durchbrechung kein Kontakt zwischen der Maske (Stempel) und der Folie stattfindet.
Durch die Hitzeeinwirkung und dem Pressdruck des Stempels setzt ein Materialfließen des Folien- und/oder Substratmaterials ein, das sich in die Ausnehmungen und/oder Durchbrechungen hinein verschiebt.

Hierdurch wird im inneren Randbereich der Ausnehmung oder Durchbrechung zwischen Substrat und Folie Material in Form eines Keiles angehäuft.
Unter Keil im Sinne der Erfindung wird eine Ansammlung oder Aufwerfung von Folien-und/oder Substratmaterial im Randbereich eines unbefestigten Folienabschnittes zwischen Folie und Substrat verstanden. Hierbei kann die Form abweichend von der Wortbedeutung des Keils sein, so kann der Materialkeil insbesondere auch eine Wulstform, eine Dreiecksform, eine Kreissegmentform, eine elliptische Form sowie Kombinationen und Schnitte aus diesen Formen annehmen.

Wird eine mehrschichtige Folie verwendet, so weist diese vorteilhaft ein substratinneres niedrigschmelzenderes Kunststoffmaterial als Siegelschicht und ein außen liegendes höher schmelzendes Material in Form einer Deckschicht/Deckelfolie auf. Ein Siegelfolienmaterial ist beispielsweise Ethylenvinylacetat (EVA) oder auch Ethylen-Acrylsäure (EAA) und ein Material für die Deckelfolie typisch Polypropylen (PP), oder auch Polystyren, Polycarbonat, Polyethylen oder Acrylate.

Vorteilhaft schmilzt das EVA beim Laminieren homogen auf. Dieses während des Schmelzens niederviskose Material wird unter der Folie in die Maskenfreiräume gedrückt, bildet eine Wulst oder einen Keil und wölbt die Folie in der Durchbrechung auf und/oder stabilisiert die Aufwölbung der Folie im Bereich der Durchbrechung.

Durch den Materialkeil wird die Folie in der Randzone zwischen den befestigten Abschnitten und im unbefestigten Abschnitt von der Substratebene abgehoben.

Vorteilhaft wird für die Siegelschicht ein Kunststoffmaterial verwendet, dass eine Schmelztemperatur von 60°C bis 190°C, insbesondere 85°C bis 130°C hat.

Die Schmelztemperatur der in Kombination mit der Siegelschicht verwendeten Deckelschicht oder Deckfolie sollte sich davon abgrenzen und darüber liegen.
Deckelfolienmaterialien sollten daher eine Schmelztemperatur von 150°C bis 400°C, insbesondere 200°C bis 300°C erreichen.

Um eine Verbindung oder Vernetzung der Kunststoffe zu erreichen muss kein vollständiges Aufschmelzen erfolgen. Alternativ kann es auch ausreichen, dass die Siegelschicht bei 60°C bis 190°C, insbesondere 85°C bis 130°C erweicht und sich das erweichte Material vernetzt. Ebenfalls kann auch eine Vernetzung oder ein Verbinden der Deckelfolie bereits durch eine Erweichung des Materials unter dem angegebenen Temperaturregime stattfinden.

Abhängig von der Viskosität der verwendeten Kunststoffe kann auch ein Laminieren ohne ein Aufschmelzen oder Anschmelzen der Materialien erfolgen. Dabei wird die Folie nur soweit erhitzt, dass eine Erweichung vom Folienmaterial erfolgt, welches dann viskos fließt.

Alternativ wäre auch denkbar, das Laminieren durch Einsatz eines Lösungsmittel zu bewerkstelligen.
Hierbei wird das Lösungsmittel auf den zu befestigenden Bereichen des Substrates aufgetragen. Zum selektiven Auftrag kann beispielsweise das Lösungsmittel durch eine Maske aufgesprüht oder aufgestrichen oder aufgestempelt werden.

Sodann wird die zu laminierende Folie aufgelegt und mittels einer weiteren Maske oder Stempels angedrückt. Dieses Verbinden kann auch bei Raumtemperatur ohne Wärmeeintrag erfolgen. Bei dieser Ausführungsform werden bevorzugt vorgeformte Folien auflaminiert.
Dabei wird durch das Lösungsmittel angelöstes Material in die vorgeformten Kammerbereiche in der Folie gedrückt und bildet einen Materialkeil.

Unter dem Begriff "Kammer" ist bei der vorliegenden Erfindung jede fluidleitende Struktur zu verstehen, die dreidimensional geformt ist, beispielsweise ein länglicher Kanal, Zuleitungen zu einem Ventil oder eine Tasche. Als Fluide können Flüssigkeiten und Gase zum Einsatz kommen.

Vorteilhaft wird ein ebenes flaches Substrat als Basis der mikrofluidischen Vorrichtung eingesetzt. Die Basis oder das Substrat kann dabei auch durch eine Folie gebildet werden.
Die mikrofluidische Struktur wird dann einzig durch Kammern, insbesondere Einlasskammem, Probekammern, Relationskammem und Kanäle gebildet, die als dreidimensionale Strukturen in der Folie ausgebildet sind und sich von der unstrukturierten Substratebene abheben.

Die Kammern und Kanäle bilden dabei ein vollständiges mikrofluidisches Netzwerk oberhalb der Substratoberfläche.

Vorteilhaft können auch fluidleitende Strukturen innerhalb des Substrates von den Kammern in der Folie überdeckt werden, wie insbesondere Kanalabschnitte oder Durchbrechungen im Substrat. Eine Durchbrechung im Substrat kann dabei fluidische Netzwerke auf der Ober-und Unterseite des Substrates verbinden oder einen Einlassbereich mit einer Öffnung im Substrat bilden, durch den Probenflüssigkeit in das mikrofluidische Netzwerk eingeführt werden kann.

Die Öffnung einer Durchbrechung oder das Ende eines Kanals im Substrat schließen mit der Substratoberfläche ab und bilden, da sich die Durchbrechung oder der Kanal ins Substrat hinein erstrecken, eine Stufe zur oberhalb der Substratebene liegenden Kammer in der Folie.

In einer kapillar betriebenen mikrofluidischen Vorrichtung kann eine derartige Stufe einen Kapillarstop bilden.

Dieser Kapillarstop kann erfindungsgemäß entweder passiv oder aktiv überwunden werden. Hierzu muss eine Benetzung der Kammerwand oder des Kammerbodens ausgehend von der Stufe im Substrat aus erfolgen.

Die Kammer- oder die Kanalstruktur in der Folie hebt sich kuppelförmig, insbesondere domartig von der Substratebene ab.

Der Randbereich zwischen der Kammerwand und dem Kammerboden bildet dabei einen Winkel von 2° bis 90°, vorteilhaft insbesondere einen Winkel von 5° bis 25°. Bei geringen Öffnungswinkeln bildet sich am Rand der Kammer ein Spalt mit geringer Höhe. Durch diese geringe Spalthöhe werden im Bodenbereich der Kammer hohe Kapillarkräfte erzeugt.

Um ein passives Überwinden des Kapillarstops zu erreichen, ist der Außenrand der Kammer derart über der Stufenkante einer Querbohrung oder eines Kanalendes angeordnet, dass zwischen der Stufenkante und der die Stufenkante überdeckenden Kammerwand ein Kapillarspalt von 1 Mikrometer bis 50 Mikrometer, insbesondere von 10 Mikrometer bis 50 Mikrometer verbleibt. Dieser Kapillarspalt kann im Betrieb durch die sich aufstauende und an der Stufe aufwölbende Flüssigkeitsfront überwunden werden.

In einer weiteren nicht gezeigten Ausführungsform wird durch einen hydrophoben Bereich ein Kapillarstop gebildet. Ein solcher Kapillarstop kann beispielsweise durch Verwendung eines hydrophoben Kunststoffes oder durch Beschichtung hergestellt sein. Auch dieser Kapillarstop kann durch die Benetzung angrenzender Folienwände überwunden werden.

In einer Ausführungsform der Erfindung wird eine Membran zwischen der Folie und dem Substrat angeordnet. Eine derartige Membran kann beispielsweise vorgesehen werden, um eine Filterung oder Separation von Partikeln in einer zugeführten Probenflüssigkeit zu bewirken. Vorteilhaft wird die Membran beispielsweise über oder in einer Durchlassöffnung im Substrat angeordnet oder in einer zur Umgebung offenen Zuführkammer für Probenflüssigkeit.

Die Membran kann dabei insbesondere in dem Zwischenraum zwischen Folie und Substrat angeordnet sein, wodurch die Membran einen Kapillarstop überbrücken kann und als Benetzungshilfe dient.

Ein Kapillarstop kann aktiv überwunden werden, indem ein Niederdrücken der Folie über der Stufenkante erfolgt, so dass der Kapillarspalt derart verkleinert wird, dass eine Benetzung der Kammer ausgehend von der fluidleitenden Struktur im Substrat stattfindet.

Vorteilhaft kann eine derartige Struktur als Ventil wirken. Dabei wird eine 1)urchlassöffnung durch das Substrat von einer Kammer überdeckt. Durch den Kapillarstop den die Durchlassöffnung bildet, wird ein Fluidfluss an der Öffnung zurückgehalten.

Wird nun die Folie im Bereich der Kammer, also die Kammerwand über der Durchlassöffnung niedergedrückt, kann der Fluidstrom mittels der stattfindenden Benetzung weitergeführt werden. Die elastische Kammerwand wirkt somit als reversible elastisches offenes Ventil im mikrofluidischen Netzwerk. Durch seine elastische Formstabilität kehrt das Folienmaterial in seine Ausgangsposition zurück, so dass nach einer ersten dosierten Fluidmenge, die abgeflossen ist, weitere Fluidquantitäten dosiert werden können.

In einer Ausführungsform der Erfindung sind sowohl auf der Ober- als auch auf der Unterseite des Substrates Folien auflaminiert und decken dort mikrofluidische Strukturen ab oder bilden mikrofluidische Kammern.

Anstelle eines Stempels oder Kolben oder sonstigen elektromechanischen Werkzeugen, die eine Verformung der Folie zur Benetzung durch Niederdrücken der Kammerwände bewerkstelligen, kann ein Dosieren von Flüssigkeiten auch durch das Einbringen von Pressluft oder durch ein Verbiegen des Substrates erfolgen.

Dazu wird ein elastisches Substrat einseitig oder beidseitig an Auflagepunkten oder Führungen am Substratträger eingespannt und dann mechanisch verbogen. Bei einer positiven Biegung und/oder Krümmung des Substrates wird die Oberfläche im Vergleich zur verformungsneutralen Kernfaser des Substrates gestreckt, wodurch auch die Folie gestreckt wird.

Hierdurch kann erreicht werden, dass die Kammerwand in Relation zu einer Kapillarstufe hin bewegt wird, wodurch eine Benetzung stattfindet. Bei größeren Biegungen kann ein vollständiges Verschließen eines Kanals oder einer Kammer erfolgen.

Unterstützend kann vorgesehen sein, dass das Substrat auf der folienabgewandten Unterseite des Substrates eine Ausnehmung, insbesondere in Form eines Keils oder eines Ausschnittes aufweist. Bei Biegung des Substrates werden in diesen Bereichen hohe Biegeradien erreicht, so dass hier besonders hohe Stellwege für die Kammerwände auftreten.

Vorteilhaft ist ein Auflagekörper, insbesondere ein Amboss vorgesehen, auf dem das Substrat bei der Biegung aufliegt oder der als verfahrbarer Stempel-wirkt und so die Biegung in den Substratträger einbringt.

Bei einer Biegung wird die Querschnittsfläche eines Kanals oder einer Kammer je nach Vorzeichen der Biegung verkleinert oder vergrößert. Der Strömungsfluss in dem Kanal oder der Kammer kann dadurch gezielt gedrosselt werden.

Das Öffnen und Schließen eines Kanals oder einer Kammer kann periodisch und richtungsorientiert erfolgen, wodurch der Kanal oder die Kammer in der Folie als Pumpe betrieben werden. So ist beispielsweise denkbar, bei einer Folienkammer, die zwei Kanalenden überdeckt, durch einen Stempel zunächst ein Kanalende durch Niederdrücken der Folie, in Form der Kammerwand zu verschließen, um dann den Stempel in Richtung des zweiten noch offenen Kanalendes zu verschieben und um dabei die in dem offenen Kammerbereich eingeschlossene Flüssigkeitsmenge in den zweiten Kanal zu drücken.

Alternativ zu diesem Pumpmechanismus kann auch das Prinzip der Schlauchpumpe eingesetzt werden, wobei Trommeln in einer Richtung über einen Folienkanal bewegt werden. In einer linearen Ausführung der Pumpe wird eine Reihe von hintereinander angeordneten Aktuatoren in einer Wellenbewegung betätigt und so Flüssigkeit in dem schlauchförmigen elastischen Folienkanal vorwärts befördert.

Vorteilhaft kann auch das Substrat durch Biegeschwingungen angeregt werden, beispielsweise mit harmonischen Eigenresonanzen des Substrates oder des fluidgefüllten elastischen Foliensystems, so dass Transversalwellen, insbesondere durchlaufende stehende Wellen in die Flüssigkeitssäulen eingeprägt werden und dadurch einen Antrieb der Flüssigkeit bewirken, oder einen Kapillarstop überwunden helfen.

Durch die vorliegende Erfindung lassen sich insbesondere sehr kleinvolumige Kammern mit Kammervolumen von 0,01, 0,1 Mikroliter, 0,2 Mikroliter, 0,5 Mikroliter, 1 Mikroliter, 3 Mikroliter, 5 Mikroliter, 10 Mikroliter und 20 Mikroliter sowie andere Volumengrößen realisieren, insbesondere auch Zwischengrößen, die sich aus Kombinationen der oben genannten Volumenwerte ergeben.

Die in der Folie gebildeten Kammern sind vorzugsweise im Querschnitt diskusförmig, wobei die Breite der Kammern im Querschnitt mindestens das 20-fache der Kammerhöhe beträgt.

In einer Ausführungsform beträgt die Querschnittshöhe im Apexbereich des Querschnitts 10 bis 15 Mikrometer, in einem mittleren Querschnittsbereich zwischen dem Rand und dem Scheitel- oder Apexbereich 5 bis 10 Mikrometer und im Randbereich 0,1 bis 5 Mikrometer. Strömt nun eine Probenflüssigkeit, in welcher Partikel unterschiedlicher Größe transportiert werden, beispielsweise Thrombozyten von 1 bis 4 Mikrometer Größe und Erythrozyten mit 7 bis 8 Mikrometer Größe, durch einen Kanal mit einem derartigen Querschnitt, so sammeln sich die Leukozyten im Apexbereich des Querschnitts, die Erythrozyten in einem mittleren Bereich und die Thrombozyten im Randbereich des Querschnitts.

Hierdurch ist eine Trennung von Blutbestandteilen möglich, insbesondere dann, wenn die Ströme aufgetrennt werden, sich also beispielsweise der Querschnitt entsprechend verzweigt oder in Kanäle oder Durchlassöffnungen mit einem zugeordneten Querschnittsdurchmesser übergeht.

In einer Ausführungsform ist vorgesehen, den Apex oder die Kuppel der Kammer abzusenken. Dadurch wird erreicht, dass sowohl in den außen liegenden Spaltbereichen der Folienkammer als auch in der Kammermitte eine hohe Kapillarität in der mikrofluidischen Struktur wirkt.

Bestimmte Kunststoffmaterialien können mit der Eigenschaft versehen werden, ihre Form unter Wärmeeinfluss zu ändern und wieder zurückzuerlangen.
Um diese Formgedächtniseigenschaft zu nutzen, wird ein Folienmaterial aus Polyethylen oder Polyamid auf eine Temperatur oberhalb einer so genannten Aktivierungstemperatur erhitzt und der Folie bei dieser Temperatur eine gewünschte Form gegeben. Insbesondere werden bei dieser Temperatur Kammern und/oder Kanäle in die Folie eingebracht, insbesondere durch ein erfindungsgemäßes Formen dieser Kammern, oder insbesondere durch Tiefziehen der erwärmten Folie. Dann wird die Folie mit einer hohen Geschwindigkeit abgekühlt, wodurch die Folie die verformte Gestalt beibehält.
Durch ein späteres Erhitzen der Folie über die Aktivierungstemperatur nimmt diese ihre ursprüngliche Gestalt wieder an.

Durch lokales Erhitzen eines Kanals aus einem derartig behandelten Formgedächtnis-Kunststoff kann der Kanal entlang der erwärmten Abschnitte geschlossen oder geöffnet werden.

Auch ein Schließventil, durch dass das Schließen einer Kammer über einer Durchlassöffnung oder über Kanalabschnitten erfolgt, kann derart realisiert werden. Weitere Merkmale der Erfindung können den folgenden Ausführungsbeispielen sowie den Zeichnungen entnommen werden.

Dabei zeigt:
- Fig. 1: ein mikrofluidisches Strukturelement mit einer Kammer oberhalb einer Substratebene,
- Fig. 2: ein mikrofluidisches Strukturelement mit einer zweischichtigen Folie,
- Fig. 3: eine von einer Folie überdeckte Durchlassöffnung mit einer Kapillarstufe zu einem Kanal,
- Fig. 4: ein aktiviertes mikrofluidisches Ventilelement nach Fig. 3,
- Fig. 5: einen mikrofluidischen Kanal zur Separation von Bestandteilen einer Suspension,
- Fig. 6: ein Ventilelement bei dem ein unbefestigter Folienabschnitt zwei Kanalenden Überdeckt,
- Fig. 7: ein Ventilelement welches durch Substratbiegung betätigt wird
- Fig. 8: ein Ventilelement, das pneumatisch betätigt wird,
- Fig. 9 und Fig. 10: ein Kanalelement auf einem Biegebalkenabschnitt, das mechanisch gedrosselt werden kann,
- Fig. 11: einen Folienkanal beider Herstellung,
- Fig. 12: einen Folienkanal mit abgesenkter Mitte,
- Fig. 13: einen Folienkanal in einem Formwerkzeug,
- Fig. 14a und Fig. 14b: einen Folienkanal mit Siegel- und Druckfolie.

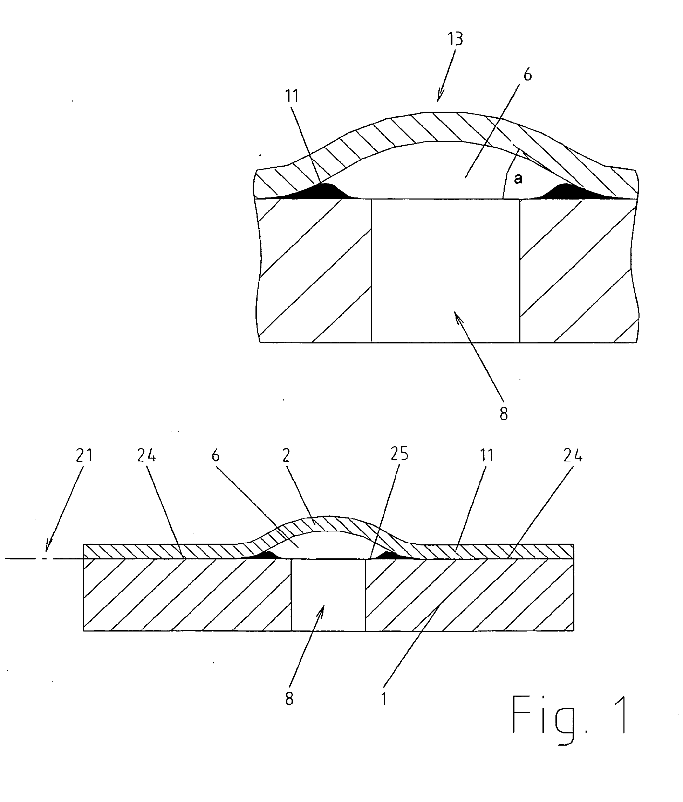

Fig. 1 zeigt im Querschnitt eine mikrofluidische Struktur zur Dosierung oder Manipulation einer Flüssigkeit.

Die mikrofluidische Struktur wird gebildet durch ein Substrat (1), dass eine Durchbrechung oder Öffnung (8) in Form einer Bohrung aufweist.

Auf dem Substratträger (1) ist eine Folie (2) zumindest abschnittsweise oder bereichsweise befestigt.

In einem unbefestigten Abschnitt oder unbefestigten Bereich ist die Folie oberhalb der ebenen Substratoberfläche ausgewölbt, so dass die unbefestigten Folienabschnitte eine Kammer (6), insbesondere einen Kanal (5) über der flachen Substratebene (21) bilden.

Die Folienabschnitte schließen die Kammer (6) vorzugsweise gegen die Umgebung flüssigkeitsdicht ab.

Alternativ zur gezeigten Durchbrechung (8) im Substrat, die insbesondere eine Einlassöffnung für ein mikrofluidisches Netzwerk ist, können auch Kanalabschnitte (5,20) oder Kammern (6) sowie Ventilräume im Substrat durch die Folie abgegrenzt sein, wie die folgenden Ausführungen zeigen.

Vorteilhaft werden die mikrofluidischen Kammern (6) und Kanäle (5) über einer unstrukturierten Substratoberfläche in die Folie geformt, so dass ein kostenaufwendiges Mikrostrukturieren des Substratträgers (1) entfällt.

Zur Herstellung der mikrofluidischen Vorrichtung wird das Substrat, das aus einem thermoplastischen Kunststoffmaterial besteht zunächst erwärmt und in einer Form abgegossen oder es werden durch Abdruck der Negativstruktur der Form in den formbaren Kunststoff Kanalstrukturen eingebracht. Vorteilhaft kann für eine derartige mikrofluidische Vorrichtung auch eine unstrukturierte Substratplatte mit einer zumindest abschnittsweise ebenen und/oder flachen Oberfläche verwendet werden. Die flachen und/oder ebenen Oberflächenbereiche der Substratplatte können zueinander stufenförmig oder terrassiert angeordnet sein, so dass einzelne Oberflächenbereiche unterschiedliche Höhen relativ zu einer durchschnittlichen Oberflächenhöhe aufweisen.

Auf der Oberfläche des Substrates wird eine Folie befestigt, insbesondere auflaminiert.

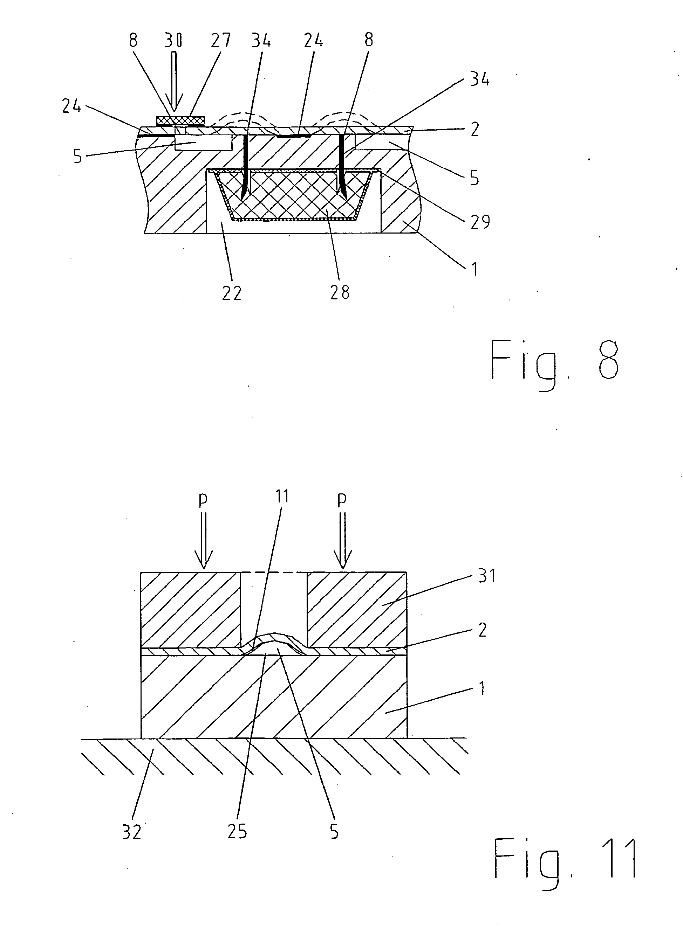

Fig. 11 zeigt ein Siegel- oder Laminierverfahren, bei dem ein ebenes unstrukturiertes Substrat (1) aus Kunststoff auf einer Stützplatte (31) aufliegt, die das Konterlager für den Laminierprozess bildet. Eine Folie (2) aus thermoplastischem Kunststoff wird auf das Substrat aufgelegt und mittels eines beheizbaren Pressstempels (31) mit einem Druck P aufgedrückt.

Das Substratmaterial besteht bevorzugt aus reinen Polyolefinen oder aus Blends von Polyolefinen, insbesondere aus Polyethylen, Polypropylen oder aus Mischblends daraus mit Copolymeren aus Ethylen oder Propylen.

Für das Folienmaterial wird bevorzugt ein thermoplastisches Elastomer (TPE) auf der Basis von Styrol/Ethylen/Butylen-Polymeren, EPR (Synthetischen Kautschuk auf Basis Ehylen, Polypropylen), EPDM (Terpolymer auf der Basis von Ethylenpropylen Dien Monomeren), Legierungen von Polyamid (PA) mit Polyolefinen, Blends von PP/ EPR/ PE, PP/ EPDM oder PE/ EVA/ EPDM, EAA oder Polypropylen Copolymeren verwendet.

Alternativ sind auch PTFE Folien oder PTFE Blends oder PTFE mit Füllstoffen wie Bronze, Glas oder Kohle als Folienmaterial denkbar, wenn ein gering benetzbarer Kunststoff zum Einsatz kommen soll.

Der Pressstempel (31) weist eine Öffnung auf, wodurch im Bereich der Öffnung kein Pressdruck P auf die auf dem Substrat liegende Folie aufgebracht wird.
Der Pressstempel (31) wird im erwärmten Zustand aufgesetzt und bringt das Folienmaterial und/oder das Substratmaterial zum Schmelzen, wobei unter Schmelzen zu verstehen ist, dass das Material nicht vollständig flüssig wird, sondern eine unter Druck fließfähige Viskosität erreicht, bzw unter Druck plastisch verformbar ist.

Da die Laminierung, dass heißt das Ineinanderfließen und das Vernetzen der Materialien sowohl vom Druck als auch von den Laminiertemperaturen abhängig ist, können diese Parameter in einem weiten Bereich variieren.
Die Geometrie der Andrückfläche des Pressstempels, der Siegeldruck, die Siegeltemperatur und die Siegelzeit sind daher so auszuwählen, dass eine gewünschte Festigkeit und Haftung der Folie (2) auf dem Substrat (1) erreicht wird.

Soll die Folie wieder entformbar sein, werden Haftfestigkeiten von 2-5 N/10mm für leicht entformbare oder 5-20 N/10mm für besser haftende Verbindungen durch die Laminierung eingestellt.

Für Festlaminierungen werden Haftwerte von 20-80 N/10mm benutzt, wobei die genannten Haftwerte auf einen Zugversuch mit einem 10mm breiten Probestück bezogen sind.
Als Pressdruck P werden Werte von 0,2-20 N/mm² verwendet bei Siegeltemperaturen von 70°C bis 170°C. Als Siegelzeiten sind 0,2 Sekunden bis 200 Sekunden vorgesehen.

Das Substratmaterial weist eine höhere Schmelztemperatur und/oder Glastemperatur als das Folienmaterial auf. Bei der Laminierung im gewählten Temperaturbereich ergibt sich daraus eine stärkere Erweichung des Folienmaterials, wodurch das Folienmaterial fließfähiger als das Substrat unter den Laminierbedingungen ist.

Da der Stempel (31) einen Druck P auf die Folie (2) und das Substrat (1) ausübt, fließt aufgrund der niedrigeren Scherviskosität insbesondere das Folienmaterial.
Durch den Druck und die Scherung wird insbesondere Folienmaterial in die von Pressdruck freien Bereiche des Stempels (31) verdrängt und baut dabei im Randbereich der Aussparung im Stempel einen Materialkeil (11) auf.
Im Bereich der Aussparung im Stempel (31) findet vorzugsweise keine Verbindung von Folie (2) und Substrat (1) statt, so dass dort ein unbefestigter Bereich (25) entsteht. Durch den Materialfluss wölbt sich die Folie im unbefestigten Bereich auf und bildet zwischen Substrat und Folie fluidleitende Mikrostrukturen. Dies können Kanäle (5) wie in Fig. 11, oder Kammern (6) oder Mikroventile sein.

Der sich ausbildende Materialkeil (11) drückt die Folie im unbefestigten Bereich höher und stützt die Folienstruktur.

Vorteilhaft können Folienkammern (6) über Bohrungen (8) oder Durchlassöffnungen (8) im Substrat (1) angeordnet werden. Da die Folie elastisch ist, kann diese leicht deformiert werden, wodurch der Strömungsfluss in Substratkanälen (5) oder durch Durchlassöffnungen (8) zwischen Substratoberseite und Substratunterseite gesteuert werden kann.
Wie Fig. 1 entnommen werden kann, ist die Folienkammer (6) durch den mittels Laminierung befestigten Bereich (24) fluiddicht gegenüber der Umgebung versiegelt.

Die Form der Folienkammer (5) oder des Folien kanals (5) ist sowohl von den Laminierbedingungen des Folienmaterials wie Druck, Laminierzeit und Temperatur als auch von der Geometrie des Pressstempels (31) abhängig.

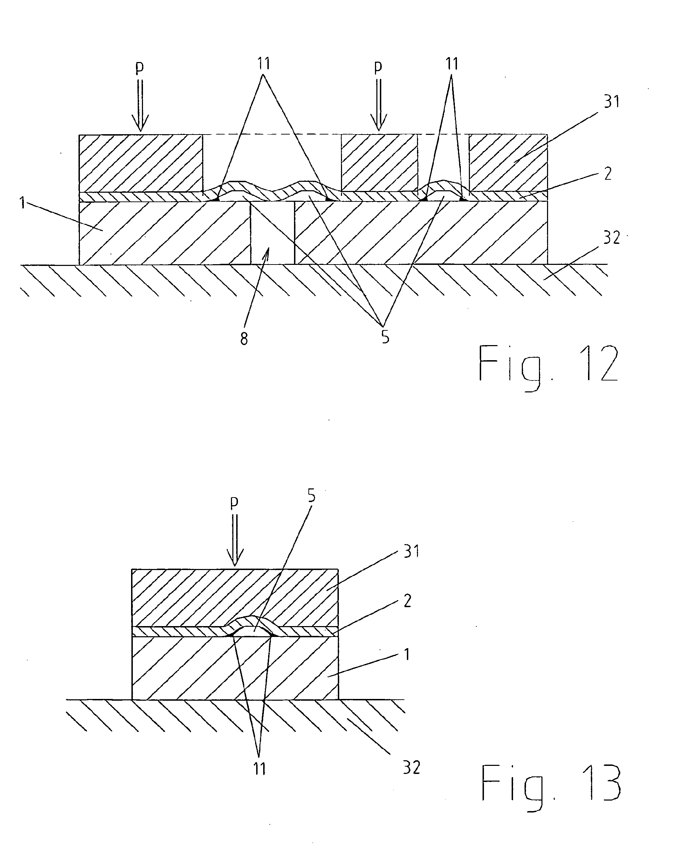

Fig. 12 zeigt einen Laminiervorgang, bei dem ein Pressstempel (31) mit unterschiedlich großen Öffnungen verwendet wird. Sowohl im Bereich der kleineren rechten Öffnung als auch im Bereich der in der Mitte gelegenen größeren Aussparung im Pressstempel (31) wölbt sich die Folie 2 auf und es werden Materialkeile (11) gebildet.

Im mittigen Bereich führt die Auswölbung zu einem wellenartigen Querschnitt der Folie (2) in Relation zum Substrat (1), wodurch sich zwei Kanäle (5) ausbilden. Vorteilhaft kann eine derartige Wellenstruktur im Bereich einer Durchlassöffnung (8) benutzt werden, da die Mittelzone der Folie (2) in eine Durchlassöffnung (8) hineinragt, wie in Fig. 12 gezeigt. Hierdurch ist gewährleistet, dass der durch die Öffnung (8) gebildete Kapillarstop durch Benetzung der Folie im durchhängenden Mittelbereich überwunden wird.

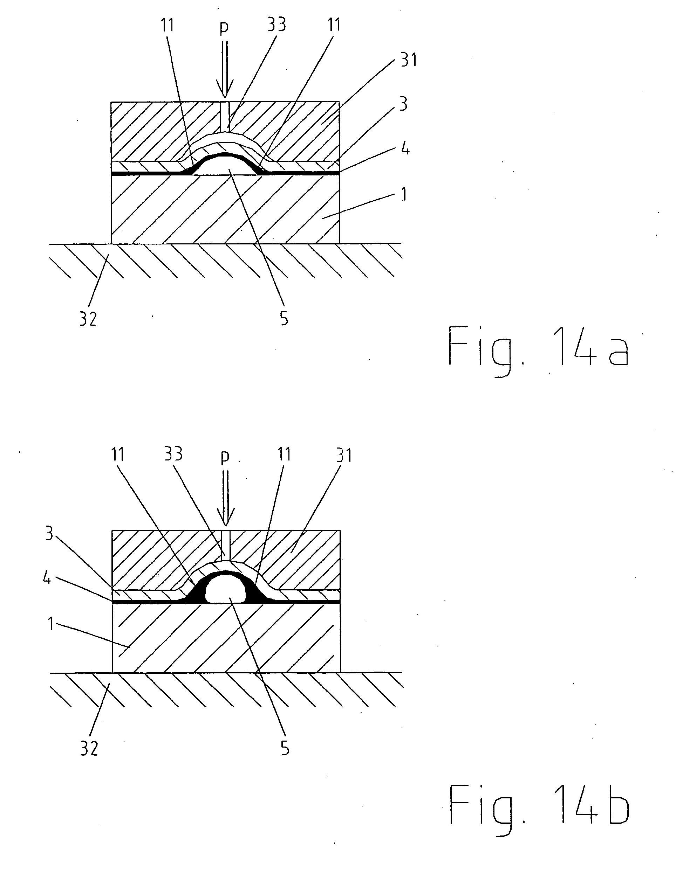

Wie die Figuren 13 und 14 zeigen, ist vorteilhaft vorgesehen, durch den Pressstempel eine Formgebung der späteren Folienkammer vorzusehen. Dazu weist der Pressstempel (31) eine halbkreisförmige Aussparung auf der Andruckfläche auf.
Während des Pressvorganges wölbt sich die Folie (2) auf, bis Sie an der Fläche der Aussparung anliegt und dadurch die halbkreisförmige Form übernommen hat, wie Figur 13 darstellt.

Eine besonders starke Verschiebung von Folienmaterial tritt bei Folien mit einer Siegelschicht auf.

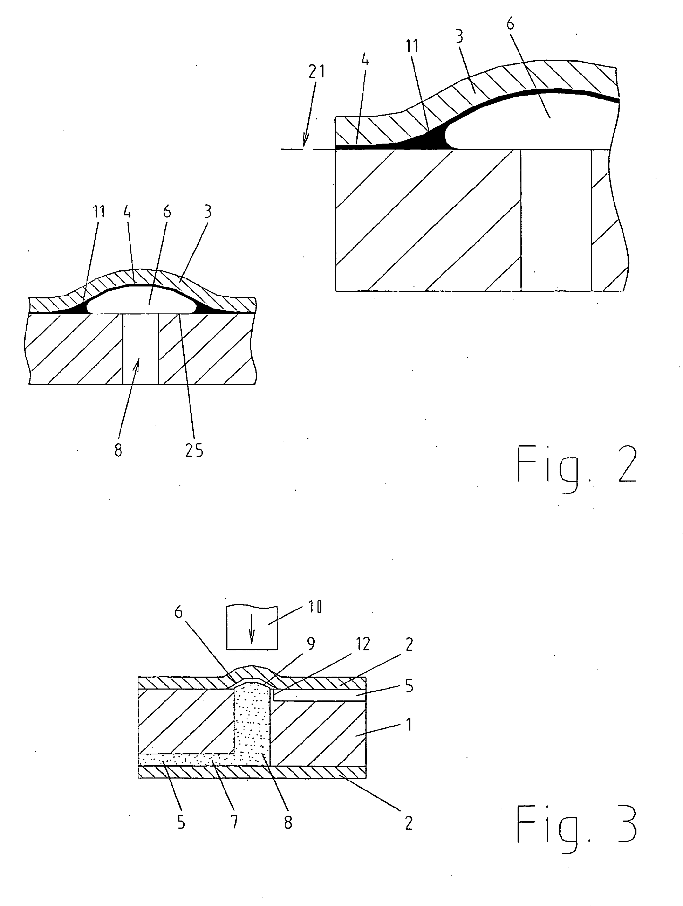

Wie Fig. 2 zeigt, besteht eine solche Folie (2) aus einer Deckfolie (3) und einer Siegelfolie (4). Die Siegelfolie ist bevorzugt aus EVA und besitzt einen niedrigeren Schmelzpunkt als die Deckfolie (3) und als das Substrat (1).
Bei Erhitzung und Aufbringen eines Druckes P wird vorwiegend das Material der Siegelfolie mit der niedrigsten Scherviskosität bei der gewählten Laminiertemperatur in den unbefestigten Bereich (25) verschoben und bildet Keile (11). Die Menge des verschobenen Materials, die Stärke der Auswölbung und die Größe des Materialkeils sind von den Parametern Laminierzeit, Pressdruck und Temperatur abhängig.

Die Figuren 2, 14 a und 14 b zeigen den Laminierprozess bzw. Siegelprozess zur Herstellung eines Fluidkanals nach unterschiedlichen Siegelzeiten bei gleich bleibender Temperatur.
Nach einer ersten Siegelzeit t1 hat sich die Folienstruktur aus Siegelfolie (4) und Deckfolie (3) in die halbkreisförmige Aussparung nach Fig. 14a hineingewölbt und füllt dies teilweise aus.

Hierbei wurde Material der Siegelfolie (4) in Keilform (11) angehäuft und hebt die Folie von der Substratoberfläche ab. Wie Figur 14b im Vergleich zur Figur 14a darstellt, verringert sich die Materialdicke der Siegelfolie (4) bei Erhöhung der Siegelzeit. Nach einer im Vergleich längeren Siegelzeit t2 hat sich die Dicke der Siegelfolie (4) deutlich verringert, wobei das Material in den halbkreisförmigen Hohlraum im Presstempel (31) geflossen ist, den die Deckelfolie (3) nun vollständig ausfüllt.

Der zunächst halbkreisförmige Kanal (5), der an seinen Seiten zumindest im Seitenbereich und im Bodenbereich durch das Siegelmaterial begrenzt wird, ist nach der Siegeldauer t2 gemäß Fig. 14b nun annähernd kreisförmig.
Durch das Fließen des Materials der Siegelfolie (4) kann der zwischen Deckfolie (3) und Substrat (1) gebildete Raum vollständig gefüllt werden. Vorteilhaft werden Füllgrade von 0,1 % bis 90%, besonders vorteilhaft von 0,1% bis 30%, insbesondere von 0, 1 % bis 5% des Zwischenraumes (6) umgesetzt.

Die Größe des Keils beeinflusst wesentlich die Kapillarkraft im Randbereich der Kanalstruktur (5).
Bei einem Öffnungswinkel zwischen Substrat (1) und der Wand des Kanals (5) von 1° bis 10°, umgibt sich bei 5° Öffnungswinkel und einem angenähert dreiecksförmigen Öffnungsquerschnitt eine Mittenhöhe, Apexhöhe von etwa 10 Mikrometern bei einem 250 µm breiten Kanal (5).

In einem Randbereich von 10 µm Breite würde bei Fehlen eines Keils (11) die Spalthöhe weniger als 1 µm betragen. Ein solcher Randspalt hätte durch die geringe Höhe eine starke Kapillarwirkung und würde Preshooter , d. h. vorlaufende Kapillarfronten bilden.
Mittels des ausgebildeten Keiles (11) werden vorteilhaft diese hochkapillaren Randbereiche gezielt gefüllt, wodurch unerwünschte Pre-shooter Effekte vermieden werden können. Somit können durch den Öffnungswinkel und die Höhe des Apex (13) wie in Fig. 1 dargestellt die Kapillareigenschaften der Folienkammern (6) und Folienkanäle (5) bei der Herstellung gezielt eingestellt werden.

Vorteilhaft kann die Formgebung der Folienkammern (6) sowohl durch die Geometrie der Aussparungen im Stempel (31) als auch durch Entlüftungen im Stempel (31) im Bereich der Aussparungen beeinflusst werden.

An die Entlüftungen kann ein Gegendruck gelegt werden, in den beispielsweise von außen ein pneumatischer Druck in die Herstellungsvorrichtung eingeleitet wird. Hierdurch ist eine gezielte Geschwindigkeit des Auswölbungsprozesses einstellbar.

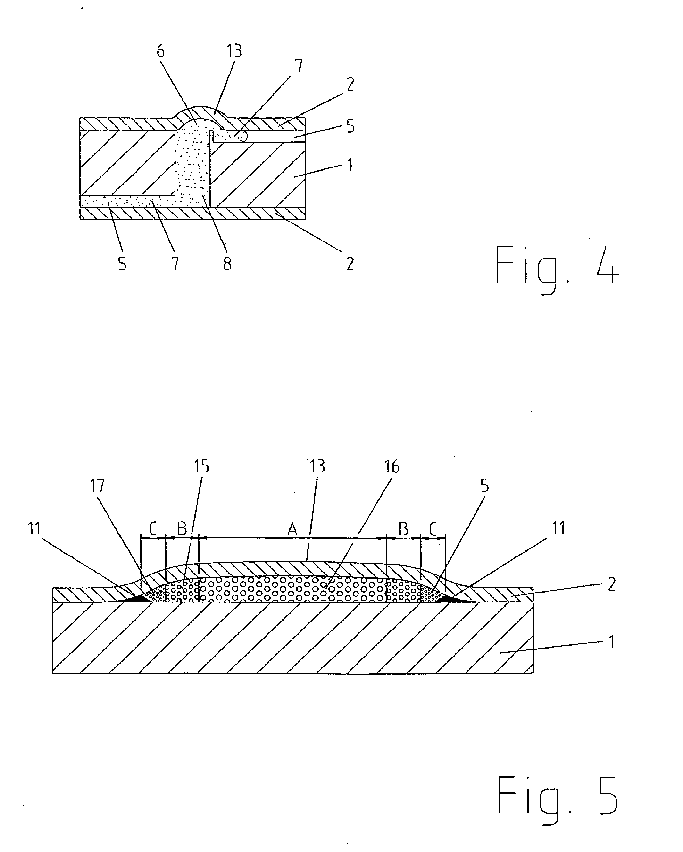

In den Figuren 3 und 4 ist eine mikrofluidische Vorrichtung dargestellt, die sowohl auf der Substratoberseite als auch auf der Substratunterseite von einer Folie abgedeckt ist. In das Substrat (2) sind auf der Ober- und der Unterseite Kanäle (5) eingebracht, die durch eine Querbohrung (8) miteinander fluidleitend verbunden sind.

Am Auslass der Querbohrung (8) an der Oberseite befindet sich eine Kante oder Stufe (12). Eine Flüssigkeit, die den unterseitigen Kanal passiert und in der Querbohrung (8) aufsteigt, bildet am oberen Ende der Querbohrung einen Meniskus (9) aus, der in die Folienkammer (6) hineinragt.
Die über dem Kammerinneren ausgewölbte Folie hat zunächst keinen Kontakt zum Meniskus der Flüssigkeit. Daher wirkt der Rand der Bohrung (8) als Kapillarstop für die in der Bohrung (8) aufsteigende Flüssigkeit.

Es ist denkbar, einen solchen Kapillarstop auch ohne Stufe (12) zu realisieren.
Dabei ist der Abstand zwischen Folie und Bohrungsrand so zu wählen, dass die Benetzung der Strukturen am Rand stoppt, also ein Kapillarstop vorliegt.
Bei Einsatz einer elastischen Folie kann die Überwindung des Kapillarstops durch das Bewegen der Folie erfolgen. Dadurch kann eine Flüssigkeit gezielt dosiert werden.
Zur Überwindung des Kapillarstops wird mittels eines Aktuators (10) in Form eines Stempels oder Kolbens die gewölbte Folie (2) im Bereich der Durchgangsöffnung (8) so weit niedergedrückt, bis eine Benetzung vom Meniskus (9) zur Folienwand hin erfolgt. Wird der Aktuator (10) vollständig niedergedrückt, so kann er auch einen Dosiervorgang gezielt beenden, indem dann die niedergedrückte Folie (2) die Bohrung (8) entlang der Substratoberseite und entlang der Stufe dichtend abschließt.

Wird der Aktuator (9) zurückbewegt, so öffnet sich die Kammer (6) aufgrund der elastischen Rückstellkräfte des Folienmaterials und/oder aufgrund des Fluiddruckes der zu dosierenden Flüssigkeit.
Beim Dosiervorgang kann die aktuierte Folienkammer (6) verschiedene Funktionen umsetzen, nämlich eine Ventilfunktion durch Öffnen und/oder Schließen der Kammer (6) durch den Aktuator (10) und eine Drosselfunktion durch teilweisen Verschließen. Auch eine Pumpfunktion kann durch gezieltes Verschließen und Öffnen erreicht werden.

Anstelle eines Aktuators ist auch denkbar, die Formgedächtniseigenschaften von bestimmten Kunststofffolienmaterialien wie Polyethylen oder Polyamid zur Bewegung der Kammerwände oder Kanalwände zu nutzen.
Dazu wird das Kunststoffmaterial bei der Herstellung über eine bestimmte Aktivierungstemperatur erhitzt, was durch den Laminierprozess erfolgt. Die dabei erhaltene Form, zum Beispiel eine der vorab benannten Formen, wird durch schnelles Abkühlen eingefroren. Wird das Material später wieder über die Aktivierungstemperatur erhitzt, so nimmt es seine Ursprungsform wieder an.
Eine halbkreisförmig gewölbte Folienwand verliert dann beispielsweise die Domform und verschließt durch ein Einformen eine Querbohrung (8) nach Fig. 3. Auch eine Verstellung der Kammerwand zum Überwinden eines Kapillarstops kann durch die Verformung realisiert werden.

Eine Erwärmung kann dabei lokal mittels einer Thermode erfolgen, durch einen flächigen Hitzestempel oder durch einen oder mehrere Hitzestrahler. Da derartige Materialien auch erhältlich sind für Aktivierungstemperaturen im Bereich unter 50°C, insbesondere 20°C - 40°C ist auch eine Wärmeaktivierung durch das Probenmaterial denkbar. Hierzu wird die Vorrichtung auf eine Temperatur unterhalb der Aktivierungstemperatur gekühlt, beispielsweise auf 25°C, wobei die Akivierungstemperatur beispielsweise 30°C beträgt. Die Probenflüssigkeit wird mit einer Temperatur oberhalb der Aktivierungstemperatur, beispielsweise 35°C eingeleitet und aktiviert dadurch selbstständig ein Verformen der Folienwände, wodurch mikrofluide Kapillarstops und Ventile geöffnet und geschlossen werden.

Da bestimmte Kunststoffe in gleicher Weise auf UV-Licht reagieren, können derartige Formgedächtniseffekte auch durch Bestrahlung mit UV-Licht aktiviert werden. Eine lokale Einkoppelung von UV-Licht und Aktivierung von Bewegungen der Folien ist beispielsweise über einen gesteuerten Remote UV-Laser oder durch die Einkoppelung von Licht mittels optischen Fasern in die Kanäle möglich.

Ein möglicher Kapillarstop an einer Querbohrung (8) nach Figur 4 kann auch passiv überwunden werden. Dazu wird der Kammerapex (13) und die Kammerwand so hergestellt und dreidimesional geformt, dass über dem Rand der Querbohrung (8) ein Kapillarspalt von 1 Mikrometer bis 20 Mikrometer, insbesondere von 3 Mikrometer bis 10 Mikrometer verbleibt.

Die in der Querbohrung (8) aufströmende Flüssigkeit bildet einen Meniskus (9) aus, der einen solchen Kapillarspalt überbrückt und den Kapillarstop dadurch passiv schließt.

Vorteilhaft wird die Folienkammer (6) zum Rand der Stufe so angeordnet, dass hohe Kapillarkräfte der Randbereiche der Kammer zur Bildung einer Kapillarbrücke ausgenutzt werden. Vorteilhaft kann der Übergangsbereich auch mit einer hydrophilen Beschichtung versehen sein, um eine Benetzung zu unterstützen.

Das erfindungsgemäße Herstellungsverfahren eignet sich insbesondere zur Herstellung von Fluidkanälen (5) über dem Substrat, deren Breite ein Vielfaches der Kanalhöhe beträgt. Dabei beträgt die Kanalbreite mindestens das 5-fache der Kanalhöhe insbesondere das 10 bis 50 fache der Kanalhöhe.

Eine derartige Struktur ist Figur 5 zu entnehmen. Dieser mikrofluidische Kanal (5) weist in einem mittigen Bereich A (13) eine Höhe von bevorzugt 10 Mikrometer, einem daran anschließenden Bereich B eine Höhe von 5 Mikrometer bis 10 Mikrometer und im Randbereich C eine Höhe von 2 bis 5 Mikrometer auf. Durch die geringe vertikale Ausdehnung des Folienkanals (5) kann dieser zum Auftrennen von Blutbestendteilen dienen. Beim Durchfließen des Kanals ordnen sich größere Blutpartikel wie Erythrozyten bevorzugt im Bereich A, mittlere Partikel wie Thrombozyten bevorzugt im Bereich B und kleine Blutplasmabestandteile bevorzugt im Bereich C an. Durch Auftrennen der Bereiche wie ein Verzweigen oder das Ableiten in Querbohrungen mit entsprechender Öffnung in den Flussbereichen kann eine Sortierung, Abtrennung oder Filterung der Blutbestandteile erfolgen.
Wird eine definierte Stelle der Folie (2) nicht mit dem Substrat verbunden und ist dieser Bereich fluidisch mit einem mikrofluidischem System verbunden, kann die Konstruktion als mikrofluidisches Ventil genutzt werden. Zum Beispiel lassen sich durch Auswahl der mechanischen Eigenschaften der Folie bestimmte Druck-Volumenstrom Verhältnisse einstellen. Des Weiteren lässt sich gezielt eine fluidische Kapazität und ein Reservoir in das System einbringen.

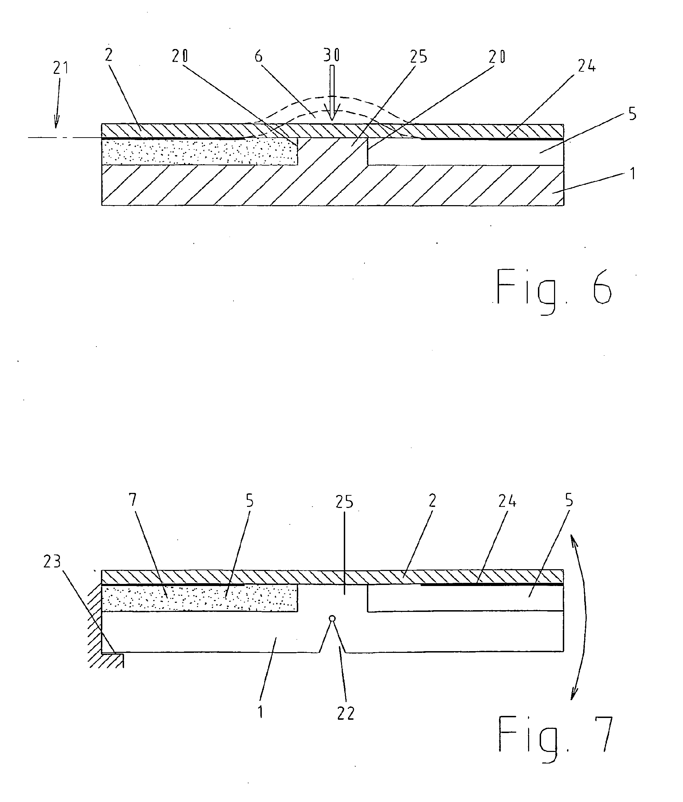

Bei einem Ventil nach Fig. 6 wurde eine elastische Folie (2) mit einem Substrat (1) entlang der Substratebene (21) verbunden. Die elastische Folie (2) liegt nach dem Verbinden in einem unbefestigten Bereich (25) auf dem Substrat auf. Wird nun eine Flüssigkeit mit einem bestimmten Druck eingeleitet, so wird die Folie (2) im Bereich (25) gedehnt, so dass zwei Kanalenden (20) im Substrat fluidisch verbunden werden.

Durch Anlegen von Druckluft (30) wirkt eine zusätzliche Rückstellkraft auf die Folie. Mittels der Druckluft kann das Ventil geöffnet und geschlossen werden.
Alternativ kann bei dieser Ausführung wie in Fig. 6 gestrichelt angedeutet nach der Herstellung auch eine gewölbte Kammer (6) ausgeformt sein, die die Enden der Kanäle (5) miteinander fluidisch verbindet. Auch in dieser Ausführung kann durch Druckluft oder einen Stempel ein Öffnen und Schließen der Kammer durchgeführt werden.

In einer weiteren Ausführungsform nach Fig. 7 wird die mikrofluidische Vorrichtung an Auflagepunkten (23) eingespannt und wie durch den Pfeil angedeutet verbogen. Durch das Verbiegen des Folien-Substratverbundes wird die Folie (2) entweder bei Biegung nach oben von der unbefestigten Fläche (25) abgehoben und gibt dann einen Fluidfluss frei und/oder bei Biegung nach unten durch Streckung auf den unbefestigten Bereich (25) gedrückt. Dadurch kann mittels des Verbiegens auch eine Ventil-, Pump- oder auch Drosselfunktion umgesetzt werden. Vorteilhaft ist zur Lokalisierung und Verstärkung der Biegung eine Ausnehmung im Substrat vorgesehen. Diese ist an einer Stelle angeordnet, an welcher größte Biegeradien erreicht werden sollen, nämlich bevorzugt unterhalb des mikrofluidischen Stellelements.

Die Lagerung und Freisetzung von Flüssigkeiten oder Pulvern ist ein wichtiges Thema in Lab-on-chip Anwendungen. Dabei ist es oft von Vorteil, wenn die Flüssigkeit oder das Pulver separat vom Chip verpackt und gelagert werden kann. Bei Bedarf kann dann das Behältnis auf den Chip appliziert werden. Problematisch ist allerdings meist die fluidische Ankopplung des Behälters an das fluidische System des Chips.

Eine Ausführung um Flüssigkeiten oder Suspensionen eine mikrofluidische Vorrichtung, den Chip einzubringen zeigt Fig. 8.

Hierbei wird ein Behälter oder Blister (28) mit einer duiffusionsdichten Folie verschlossen, nachdem eine Befüllung des Behälters mit einer Flüssigkeit öder Suspension stattgefunden hat. Die Flüssigkeit kann insbesondere ein Analyt sein. Auf der Verschlussfolie des Behälters (28) ist eine selbstklebende und/oder selbstdichtende Schicht oder Folie aufgebracht.

In diesem Zustand kann der Behälter gelagert werden.
Zum Einsatz des Behälters wird dieser in eine Ausnehmung (22) im Substrat (1) eingesetzt, wobei die Klebeschicht (29) eine dichtende Verbindung zum Substrat eingeht. Bei diesem Verbinden oder Assemblieren wird der Behälter durch z.B. Nadeln (34) geöffnet. Die selbstklebende Schicht kontaktiert den Chip und dichtet ihn gegen die Öffnungen in Chip und Behälter ab.
Auf der Oberseite der Vorrichtung sind Kanäle (5) in das Substrat eingebracht. Die Nadeln (34) sind Hohlnadeln, welche in Bohrungen (8) des Substrates befestigt, insbesondere verklebt sind. Alternativ können die Nadeln (34) beim Spritzgussprozess oder Formprozess des Substratträgers (1) umspritzt oder eingespritzt werden.
Ein Kanal (5) ist über eine Öffnung (8) in der Folie (2) mit einem Kanal (5) fluidisch verbunden. Die Öffnung (8) ist abgedeckt von einer hydrophoben Belüftung, einem hydrophoben Ventil, welches durchlässig für Gase und nahezu undurchlässig für wässrige Flüssigkeiten ist.
Die Folie (2) ist vollflächig am Substrat befestigt, wobei unbefestigte Bereiche an der Nadelöffnung und an den Kanalenden liegen. Die Folie liegt auf den unbefestigten Bereichen dichtend auf. Durch Zuführung von Druckluft (30) wölbt sich, wie in Fig. 8 durch gestrichelte Linien angedeutet, die Folie. Die Druckluft strömt über eine erste Hohlnadel (34) in den Behälter und verdrängt den Analyten durch eine zweite Hohlnadel (34) in den Kanal (5).

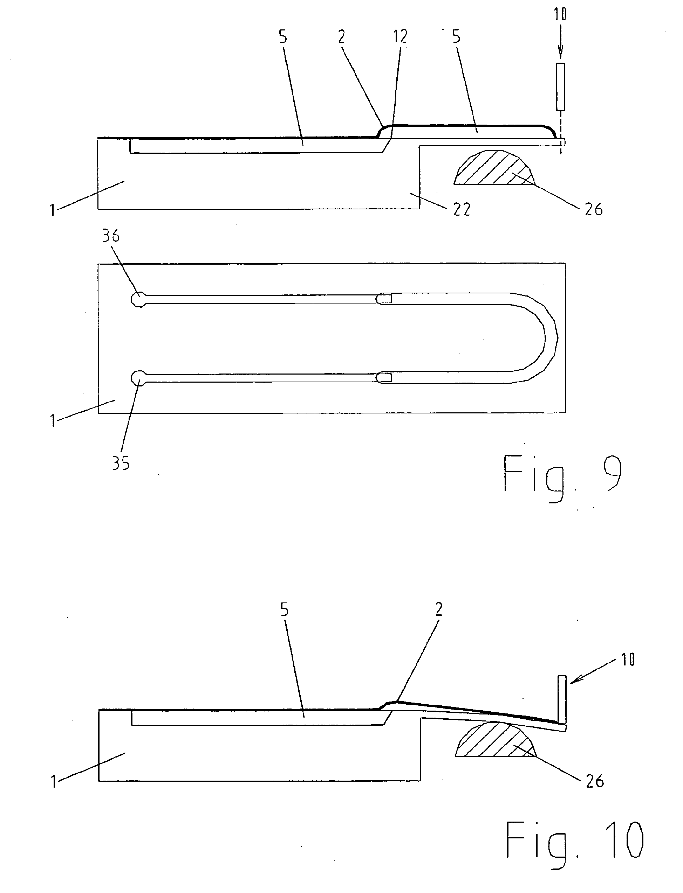

Eine Ausführung bei der ein Volumenstrom durch einen Kanal gezielt gedrosselt wird, zeigt Fig. 10.
Ein Substrat (1) mit einer abgestuften Dicke weist in einem ersten Bereich eine größere Dicke auf. In diesem Bereich ist ein Einlass (35) und der Auslass (36) und ein Auslassangeordnet, der Einlass (35) und der Auslass (36) können mit anderen nicht gezeigten fluidischen Strukturen eines mikrofluidischen Netzwerkes verbunden sein. Vom Einlass (35) und Auslass (36) zweigen sich Kanäle (5) ab, die im Substrat verlaufen und von einer Folie (2) abgedeckt sind. In einem angrenzenden Bereich ist die Dicke des Substrates deutlich verringert wie der Querschnitt nach Fig. 9 zeigt. Fluidisch verbunden mit den Kanälen im ersten Bereich werden im zweiten Bereich Folienkanäle (5) geformt, die sich oberhalb der dort planen Substratebene abheben.

Das dickenreduzierte Substrat (1) liegt auf einem Auflagekörper (26), insbesondere einem Amboss auf. Mit einem Aktuator (10) der am Ende des Substrates ansetzt, kann dieser Substratbereich verbogen werden. Durch die Biegung wird der Folienkanal (5) wie Fig. 10 darstellt gestreckt, wodurch der Volumenfluss im Folienkanal (5) gedrosselt wird.

### Bezugszeichen

1- Substrat
2- Folie
3- Deckfolie
4- Siegelfolie
5- Kanal
6- Kammer
7- Flüssigkeit
8- Bohrung/Durchlassöffnung
9- Meniskus
10- Aktuator
11- Materialkeil
12- Stufe/Kante
13- Apex
15- Thrombozyten
16- Erythrozyten
17- Blutplasma
20- Kanalende
21 Substratebene
22- Ausnehmung/Aussparung
23- Auflagepunkte
24- Befestigter Bereich
25- Unbefestigter Bereich
26- Auflagekörper
27- Hydrophobe Belüftung
28- Behälter/Blister
29- Selbstklebende Schicht
30- Druckluft
31- Pressstempel
32- Stützplatte
33- Entlüftung
34- Nadel
35- Einlass
36- Auslass

## Patentansprüche

1. Mikrofluidische Struktur, umfassend ein Substrat (1), sowie eine an dem Substrat (1) flächig befestigte Folie (2) mit unbefestigten Abschnitten (25), so dass in einem unbefestigten Abschnitt (25) eine Kammer (6) oder ein Kanal (5) oberhalb der Substratebene (21) gebildet wird, **dadurch gekennzeichnet, dass** die Folie (2) eine Mehrschichtfolie, insbesondere Zweischichtfolie ist, aus einer am Substrat angeordneten Siegelschicht (4) und aus einer darüber angeordneten Deckschicht (3) besteht und die Siegelschicht (4) eine niedrigere Schmelz- und/oder Erweichungstemperatur als die Deckschicht (3) aufweist und wobei in der Randzone zwischen den unbefestigten (25) und den befestigten Abschnitten (24) durch viskoses Fließen des Folienmaterials beim Verbinden der Folie (2) mit dem Substrat (1) ein Materialkeil (11) geformt wird, der einen Übergang zwischen der Kammerwand und dem Substrat (1) bildet und die Kammerwand von der Substratebene (21) abhebt.

2. Mikofluidische Struktur nach Anspruch 1, **dadurch gekennzeichnet, dass** die Erweichungstemperatur der Siegelschicht (4) 60°C bis 200°C beträgt, insbesondere 85°C bis 110°C.

3. Mikrofluidische Struktur nach Anspruch 1, **dadurch gekennzeichnet, dass** die Erweichungstemperatur der Deckschicht (3) 150°C bis 350°C beträgt, insbesondere 200°C bis 300°C.

4. Mikrofluidische Struktur nach einem der vorhergehenden Ansprüche, **dadurch gekennzeichnet, dass** durch die Kammer (6) und/oder Kanäle (5) ein mikrofluidisches Netzwerk oberhalb der Substratebene gebildet wird.

5. Mikrofluidische Struktur nach einem der vorhergehenden Ansprüche, **dadurch gekennzeichnet, dass** in das Substrat (1) Ausnehmungen (22) in Form von Kanälen (5) eingeformt sind und eine Kammer (6) oder ein Kanal (5) in der Folie ein Ende eines Kanalabschnittes (5) im Substrat überdeckt.

6. Mikrofluidische Struktur nach Anspruch 5, **dadurch gekennzeichnet, dass** die Wände des Kanalabschnittes im Substrat (1) eine Stufe zur Kammer (6) oder eine Stufe zum Kanal (5) in der Folie (2) bilden.

7. Mikrofluidische Struktur einem der Ansprüche 4 oder 6, **dadurch gekennzeichnet, dass** die Kammer (6) oder der Kanal (6) eine Durchlassöffnung (8), insbesondere Querbohrung (8) durch das Substrat (1) überdeckt.

8. Mikrofluidische Struktur nach Anspruch 7, **dadurch gekennzeichnet, dass** der Außenrand der Kammer (6) derart über der Querbohrung (8) angeordnet ist, dass ein Kapillarspalt von 1 Mikrometer bis 20 µm, insbesondere von 3-10 Mikrometer zwischen der Kammerwand und der Stufenkante (12) erzeugt wird.

9. Mikrofluidische Struktur nach Anspruch 6 oder 7, **dadurch gekennzeichnet, dass** auf der Ober- und auf der Unterseite ein Kanal (5) in die Querbohrung (8) mündet.

10. Mikrofluidische Struktur nach Anspruch 9, **dadurch gekennzeichnet, dass** auf der Oberseite und der Unterseite des Substrates Folien (2) angeordnet sind.

11. Mikrofluidische Struktur nach Anspruch 1 oder 2, **dadurch gekennzeichnet, dass** die Kammer (6) und/oder der Kanal (5) im Querschnitt diskusförmig, insbesondere kugelabschnittsförmig sind, wobei die Querschnittsbreite mindestens das 20-fache der Querschnittshöhe beträgt und der Winkel, den die Kammerwand im Randbereich des Querschnitts mit der Substratebene (21) bildet 1° bis 20°, insbesondere 5° bis 12° beträgt.

12. Mikrofluidische Struktur nach Anspruch 11, **dadurch gekennzeichnet, dass** die Kammerhöhe in einem ersten Querschnittsbereich im Apex (13) der Kammer 10 bis 15 Mikrometer, in einem zweiten Querschnittsbereich zwischen dem Apex (13) und dem Rand 5 - 10 µm und in einem dritten Randbereich 0,1 µm bis 5 µm beträgt, so dass sich durch die variierende Querschnittshöhe Fluidpartikel unterschiedlicher Größe in verschiedenen Strömungsbereichen anordnen.

13. Mikrofluidische Struktur nach Anspruch 12, **dadurch gekennzeichnet, dass** das Fluid Blut ist.

14. Mikrofluidische Struktur nach Anspruch 13, **dadurch gekennzeichnet, dass** im ersten Bereich vorwiegend rote Blutkörperchen, im zweiten Bereich vorwiegend Thrombozyten und im dritten Bereich vorwiegend Blutplasma fließt.

15. Mikrofluidische Strukturen nach Anspruch 11, **dadurch gekennzeichnet, dass** die Mitte (13) der Kuppel zur Substratebene (21) gegenüber einem außen liegenden Bereich abgesenkt ist, derart das der Abstand der Substratebene (21) vom Kuppelmittelpunkt weniger als die Hälfte des vertikalen Maximalabstandes zwischen der Kuppelwand und der Substratebene (21) beträgt.

16. Mikrofluidische Struktur nach Anspruch 15, **dadurch gekennzeichnet, dass** ein Kanal (5) oder eine Durchlassöffnung (8), insbesondere eine Querbohrung (8) unterhalb der Kammerkuppel (13) angeordnet ist und wobei der abgesenkte Kuppelmittelpunkt als kapillarer Initialisierungspunkt wirkt.

17. Mikrofluidische Struktur nach einem der Ansprüche 6 bis 8, **dadurch gekennzeichnet**, das die Stufenkante (12) einen Kapillarstop bildet, wobei durch Aktuieren der flexiblen Kammerwand der Spaltabstand zwischen Kammerwand und Stufenkante derart verändert werden kann, dass eine Benetzung des Spaltes erfolgt.

18. Mikrofluidische Struktur nach Anspruch 11, **dadurch gekennzeichnet, dass** mindestens zwei in das Substrat eingeformte Kanalenden von der kuppelförmigen Kammer überdeckt werden.

19. Mikrofluidische Struktur nach Anspruch 18, **dadurch gekennzeichnet, dass** das Substrat (1) im Bereich unterhalb der unbefestigten Folie, insbesondere auf der der Folie abgewandten Unterseite des Substrates eine Ausnehmung (22) aufweist.

20. Mikrofluidische Struktur nach Anspruch 19, **dadurch gekennzeichnet, dass** die Ausnehmung (22) keilförmig oder kugelförmig oder halbkugelförmig oder rechteckig ist.

21. Mikrofluidische Struktur nach Anspruch 19, **dadurch gekennzeichnet, dass** das Substrat (1) flexibel ist, insbesondere einer Biegespannung unterworfen werden kann, insbesondere im Keilbereich elastisch form reversibel gebogen werden kann.

22. Mikrofluidische Struktur nach Anspruch 21, **dadurch gekennzeichnet, dass** das Substrat (1) Mittel zum mechanischen Einspannen aufweist.

23. Mikrofluidische Strukturen nach Anspruch 22, **dadurch gekennzeichnet, dass** die Mittel zum Einspannen Führungen und Auflagepunkte (23) sind.

24. Mikrofluidische Struktur nach Anspruch 1 oder 2, **dadurch gekennzeichnet, dass** das Substratmaterial elastisch ist.

25. Mikrofluidische Struktur nach Anspruch 24, **dadurch gekennzeichnet, dass** die Substratdicke entlang eines Streckenabschnittes einer Kammer und/oder eines Kanals verringert ist, so dass sich dieser Bereich unter verringerter Biegekraft verformt, insbesondere eine Querschnittsänderung der Fluidkammer oder des Fluidkanals in der Folie bedingt.

26. Mikrofluidische Struktur nach Anspruch 25, **dadurch gekennzeichnet, dass** ein Auflagekörper (26), insbesondere Amboss, zur Auflage des dickenreduzierten Substrates unter dem Substrat (1) angeordnet ist.

27. Mikrofluidische Struktur nach Anspruch 25 oder 26, **dadurch gekennzeichnet, dass** der Fluidkanal eine durch Biegung der Struktur verstellbare Drossel bildet.

28. Verfahren zur Herstellung einer insbesondere nach den vorhergehenden Ansprüchen ausgebildeten mikrofluidischen Struktur wobei eine flache, ebene mindestens zweischichtige_Folie (2) auf ein ebenes plattenförmiges Substrat (1) laminiert wird, wobei die an das Substrat angrenzende Folienschicht, insbesondere Siegelschicht (4) einen niedrigeren Erweichungspunkt und/oder Schmelzpunkt als eine außenliegende Deckfolie (3) aufweist und wobei zum Laminieren eine Maske (31) mit mindestens einer Ausnehmung (22) oder Durchbrechung unter Druck und/oder Hitzeeinwirkung die Folie (2) auf das Substrat aufpresst, wobei die Folie auf eine Temperatur nahe der Schmelz und/oder Erweichungstemperatur der an das Substrat angrenzenden Folienschicht gebracht wird, bei der ein viskoses Fließen von Folien-und/oder Substratmittel in den Bereich der Ausnehmung oder Durchbrechung erfolgt, so dass sich ein Materialkeil (11) bildet und wobei sich die Folie im Bereich der Ausnehmung zu einer Kammer auswölbt.

29. Verfahren nach Anspruch 28, **dadurch gekennzeichnet, dass** eine Laminiertemperatur von 70°C bis 350°C insbesondere 120°C bis 150°C eingesetzt wird.

30. Verfahren nach einem der Ansprüche 28 oder 29, **dadurch gekennzeichnet, dass** die Folie (2) mittels einer Maske in Form eines Rollenstempels auf das Substrat (1) laminiert wird.

31. Verfahren nach einem der Ansprüche 28 oder 29, **dadurch gekennzeichnet, dass** die Folien mittels einer Maske in Form eines Stempellaminators auf das Substrat laminiert wird.

## Claims

1. Microfluidic structure, comprising a substrate (1), and a film (2) attached flat to the substrate (1) with unattached portions (25), so that a chamber (6) or a channel (5) is formed above the substrate plane (21) in an unattached portion (25), **characterised in that** the film (2) is a multilayer film, in particular a two-layer film, it consists of a sealing layer (4) arranged on the substrate and a covering layer (3) arranged above it, and the sealing layer (4) has a lower melting and/or softening temperature than the covering layer (3), and in the edge zone between the unattached (25) and attached portions (24) a wedge of material (11) is formed by the viscous flow of the film material as the film (2) is bonded to the substrate (1), this wedge of material (11) forming a transition between the chamber wall and the substrate (1) and lifting the chamber wall away from the substrate plane (21).

2. Microfluidic structure according to claim 1, **characterised in that** the softening temperature of the sealing layer (4) is 60°C to 200°C, in particular 85°C to 110°C.

3. Microfluidic structure according to claim 1, **characterised in that** the softening temperature of the covering layer (3) is 150°C to 350°C, in particular 200°C to 300°C.

4. Microfluidic structure according to one of the preceding claims, **characterised in that** a microfluidic network is formed by the chamber (6) and/or channels (5) above the substrate plane.

5. Microfluidic structure according to one of the preceding claims, **characterised in that** recesses (22) in the form of channels (5) are formed in the substrate (1) and a chamber (6) or a channel (5) in the film covers one end of a channel section (5) in the substrate.

6. Microfluidic structure according to claim 5, **characterised in that** the walls of the channel section in the substrate (1) form a step to the chamber (6) or a step to the channel (5) in the film (2).

7. Microfluidic structure according to one of claims 4 or 6, **characterised in that** the chamber (6) or the channel (5) covers a throughflow opening (8), in particular a transverse bore (8) through the substrate (1).

8. Microfluidic structure according to claim 7, **characterised in that** the outer edge of the chamber (6) is arranged above the transverse bore (8) such that a capillary gap of 1 micron to 20 µm, in particular from 3 - 10 microns is produced between the chamber wall and the edge (12) of the step.

9. Microfluidic structure according to claim 6 or 7, **characterised in that** a channel (5) opens into the transverse bore (8) on the top and bottom.

10. Microfluidic structure according to claim 9, **characterised in that** films (2) are arranged on the top and bottom of the substrate.

11. Microfluidic structure according to claim 1 or 2, **characterised in that** the chamber (6) and/or the channel (5) is disc-shaped in cross-section, particularly in the shape of a spherical segment, the cross-sectional width being at least 20 times the cross-sectional height and the angle formed between the chamber wall in the edge region of the cross-section and the substrate plane (21) being 1° to 20°, in particular 5° to 12°.

12. Microfluidic structure according to claim 11, **characterised in that** the chamber height is 10 to 15 microns in a first cross-sectional region at the apex (13) of the chamber, 5-10 µm in a second cross-sectional region between the apex (13) and the edge and 0.1 µm to 5 µm in a third edge region, so that as a result of the varying cross-sectional height fluid particles of different sizes arrange themselves in different flow regions.

13. Microfluidic structure according to claim 12, **characterised in that** the fluid is blood.

14. Microfluidic structure according to claim 13, **characterised in that** predominantly red blood cells flow in the first region, predominantly thrombocytes flow in the second region and predominantly blood plasma flows in the third region.

15. Microfluidic structures according to claim 11, **characterised in that** the centre (13) of the cupola or dome to the substrate plane (21) is lowered relative to an outer region such that the distance of the substrate plane (21) from the centre of the dome is less than half the maximum vertical distance between the wall of the dome and the substrate plane (21).

16. Microfluidic structure according to claim 15, **characterised in that** a channel (5) or a throughflow opening (8), in particular a transverse bore (8) is arranged underneath the chamber dome (13) and the lowered centre of the dome acts as a capillary initiating point.

17. Microfluidic structure according to one of claims 6 to 8, **characterised in that** the edge (12) of the step forms a capillary stop, while by actuation of the flexible chamber wall the gap spacing between the chamber wall and the edge of the step can be altered so that the gap is wetted.

18. Microfluidic structure according to claim 11, **characterised in that** at least two channel ends formed in the substrate are covered by the dome-shaped chamber.

19. Microfluidic structure according to claim 18, **characterised in that** the substrate (1) has a recess (22) in the region underneath the unattached film, particularly on the bottom of the substrate, remote from the film.

20. Microfluidic structure according to claim 19, **characterised in that** the recess (22) is wedge-shaped or spherical or hemispherical or rectangular.

21. Microfluidic structure according to claim 19, **characterised in that** the substrate (1) is flexible, in particular can be subjected to a flexural stress, in particular can be bent elastically in a reversible manner in the wedge region.

22. Microfluidic structure according to claim 21, **characterised in that** the substrate (1) comprises means for mechanical clamping.

23. Microfluidic structures according to claim 22, **characterised in that** the clamping means are guides and contact points (23).

24. Microfluidic structure according to claim 1 or 2, **characterised in that** the substrate material is elastic.

25. Microfluidic structure according to claim 24, **characterised in that** the substrate thickness is reduced along a portion of the extent of a chamber and/or a channel so that this region deforms under reduced bending force, more particularly brings about a change in the cross-section of the fluid chamber or fluid channel in the film.

26. Microfluidic structure according to claim 25, **characterised in that** a support member (26), particularly an anvil, is arranged underneath the substrate (1) for supporting the reduced-thickness substrate.

27. Microfluidic structure according to claim 25 or 26, **characterised in that** the fluid channel forms a constriction that can be adjusted by bending the structure.

28. Method of producing a microfluidic structure constructed in particular according to the preceding claims, wherein an at least two-layered flat, planar film (2) is laminated onto a flat sheet-like substrate (1), wherein the film layer adjoining the substrate, particularly the sealing layer (4), has a lower softening point and/or melting point than an outer covering film (3), and wherein for the lamination a mask (31) with at least one recess (22) or opening presses the film (2) onto the substrate under pressure and/or under the effect of heat, wherein the film is brought to a temperature close to the melting and/or softening temperature of the sealing film adjacent to the substrate, at which there is a viscous flow of film and/or substrate medium into the region of the recess or opening, so that a wedge of material (11) is formed and the film bulges in the region of the recess to form a chamber.

29. Method according to claim 28, **characterised in that** a laminating temperature of 70°C to 350°C, particularly 120°C to 150°C is set.

30. Method according to one of claims 28 or 29, **characterised in that** the film (2) is laminated onto the substrate (1) using a mask in the form of a roller die.

31. Method according to one of claims 28 or 29, **characterised in that** the film is laminated onto the substrate by means of a mask in the form of a die laminator.

## Revendications

1. Structure microfluidique, comprenant un substrat (1), ainsi qu'un film (2) fixé à plat sur le substrat (1) comprenant des portions non fixées (25), de sorte qu'un compartiment (6) ou un canal (5) est formé dans une portion non fixée (25), au-dessus de la surface (21) du substrat, **caractérisée en ce que** le film (2) est un film multicouches, en particulier un film bicouches, l'une d'entre elles étant une couche de fixation (4) disposée sur le substrat et l'une d'entre elles étant une couche d'enduit (3) disposée sur celle-ci, la couche de fixation (4) ayant une température de fusion et/ou de ramollissement inférieure à celle de la couche d'enduit (3), sachant que, par le biais de l'écoulement visqueux du matériau formant les films lors de la fixation du film (2) sur le substrat (1), se forme, dans les zones limitrophes entre les portions non fixées (25) et fixées (24), un renflement de matière (11), qui forme une jonction entre la paroi du compartiment et le substrat (1) et éloigne la paroi du compartiment de la surface (21) du substrat.

2. Structure microfluidique selon la revendication 1, **caractérisée en ce que** la température de ramollissement de la couche de fixation (4) est comprise entre 60 °C et 200 °C, en particulier entre 85 °C et 110 °C.

3. Structure microfluidique selon la revendication 1, **caractérisée en ce que** la température de ramollissement de la couche d'enduit (3) est comprise entre 150 °C et 350 °C, en particulier entre 200 °C et 300 °C.

4. Structure microfluidique selon l'une quelconque des revendications précédentes, **caractérisée en ce qu'**un réseau microfluidique est formé par les compartiments (6) et/ou les canaux (5) au-dessus de la surface du substrat.

5. Structure microfluidique selon l'une quelconque des revendications précédentes, **caractérisée en ce que** l'on forme dans le substrat (1) des évidements (22) en forme de canaux (5), et **en ce qu'**un compartiment (6) ou un canal (5) du film recouvre une extrémité d'une portion de substrat dessinant un canal (5).

6. Structure microfluidique selon la revendication 5, **caractérisée en ce que** les parois des portions de substrat (1) dessinant un canal forment un palier menant au compartiment (6) ou un palier menant au canal (5) du film (2).

7. Structure microfluidique selon l'une quelconque des revendications 4 ou 6, **caractérisée en ce que** le compartiment (6) ou le canal (5) recouvre l'ouverture d'un passage (8), en particulier un forage transversal (8) à travers le substrat (1).

8. Structure microfluidique selon la revendication 7, **caractérisée en ce que** le bord extérieur du compartiment (6) est disposé sur le forage transversal (8) de manière à ce qu'un interstice capillaire de 1 micromètre à 20 µm, en particulier de 3 à 10 micromètres, soit engendré entre la paroi du compartiment et l'arête (12) du palier.

9. Structure microfluidique selon la revendication 6 ou 7, **caractérisée en ce qu'**un canal (5) débouche dans le forage transversal (8) du coté supérieur et du coté inférieur.

10. Structure microfluidique selon la revendication 9, **caractérisée en ce que** des films (2) sont disposés du coté supérieur et du coté inférieur du substrat.

11. Structure microfluidique selon la revendication 1 ou 2, **caractérisée en ce que** la section du compartiment (6) et/ou du canal (5) a la forme d'un disque, en particulier la forme d'une section de sphère, la largeur de la section étant au moins 20 fois plus grande que la hauteur de la section, et l'angle que forme la paroi du compartiment dans la zone limitrophe de la section avec la surface (21) du substrat valant 1° à 20°, en particulier 5° à 12°.

12. Structure microfluidique selon la revendication 11, **caractérisée en ce que** la hauteur du compartiment est de 10 à 15 micromètres dans une première zone de la section à l'apex (13) du compartiment, de 5 à 10 µm dans une deuxième zone de la section entre l'apex (13) et le bord et de 0,1 µm à 5 µm dans une troisième zone au bord, de sorte que, du fait de la variation du diamètre de la section, des particules de tailles différentes présentes dans le fluide s'ordonnent dans des zones différentes de l'écoulement.

13. Structure microfluidique selon la revendication 12, **caractérisée en ce que** le fluide est du sang.

14. Structure microfluidique selon la revendication 13, **caractérisée en ce que** circulent, dans la première zone, principalement les globules rouges, dans la deuxième zone, principalement les thrombocytes et dans la troisième zone principalement le plasma sanguin.

15. Structures microfluidiques selon la revendication 11, **caractérisées en ce que** le milieu de la cuvette (13) s'abaisse vers la surface (21) du substrat, en face d'une zone se situant à l'extérieur, de manière à ce que la distance entre la surface (21) du substrat et le point médian de la cuvette soit inférieure à la moitié de la distance verticale maximale entre la paroi de la cuvette et la surface (21) du substrat.

16. Structure microfluidique selon la revendication 15, **caractérisée en ce qu'**un canal (5) ou l'ouverture d'un passage (8), en particulier un forage transversal (8) est disposé(e) en-dessous de la cuvette (13) du compartiment, et le point médian abaissé de la cuvette agissant comme point de départ du capillaire.

17. Structure microfluidique selon l'une quelconque des revendications 6 à 8, **caractérisée en ce que** l'arête (12) du palier sert de point d'arrêt du capillaire, l'interstice entre la paroi du compartiment et l'arête du palier pouvant être modifié, en actionnant la paroi flexible du compartiment, de manière à obtenir une humectation de l'interstice.

18. Structure microfluidique selon la revendication 11, **caractérisée en ce qu'**au moins deux des extrémités de canal formées dans le substrat sont recouvertes par le compartiment formant une cuvette.

19. Structure microfluidique selon la revendication 18, **caractérisée en ce que** le substrat (1) présente, dans la zone en-dessous du film non fixé, en particulier du coté inférieur du substrat, à distance du film, un évidement (22).

20. Structure microfluidique selon la revendication 19, **caractérisée en ce que** l'évidement (22) est en forme de coin ou de forme sphérique ou hémisphérique ou est à angle droit.

21. Structure microfluidique selon la revendication 19, **caractérisée en ce que** le substrat (1) est flexible, en particulier **en ce qu'**il peut être soumis à une contrainte de courbure, en particulier **en ce que**, au niveau du renflement, il peut être courbé de manière élastiquement réversible.

22. Structure microfluidique selon la revendication 21, **caractérisée en ce que** le substrat (1) comprend des moyens mécaniques de serrage.

23. Structures microfluidiques selon la revendication 22, **caractérisées en ce que** les moyens de serrage sont des guides ou des points d'attache (23).

24. Structure microfluidique selon la revendication 1 ou 2, **caractérisée en ce que** le matériau composant le substrat est élastique.

25. Structure microfluidique selon la revendication 24, **caractérisée en ce que** l'épaisseur du substrat, le long d'une portion de parcours formant un compartiment et/ou un canal, est réduite, de sorte que cette zone se déforme sous une force latérale réduite, en particulier du fait d'une modification de la section du compartiment ou du canal de fluide dans le film.

26. Structure microfluidique selon la revendication 25, **caractérisée en ce qu'**un élément d'appui (26), en particulier une enclume, est disposé sous le substrat (1), afin d'offrir un appui au substrat d'épaisseur réduite.

27. Structure microfluidique selon la revendication 25 ou 26, **caractérisée en ce que** le canal de fluide forme un étranglement ajustable en courbant la structure.

28. Procédé de fabrication d'une structure microfluidique, en particulier mise en oeuvre selon les revendications précédentes, dans lequel un film (2) plat, plan d'au moins deux couches est appliqué sur un substrat (1) plan formant des plaques, la couche de film attenante au substrat, en particulier la couche de fixation (4), ayant une température de ramollissement et/ou une température de fusion inférieure à celle d'une couche d'enduit (3) se situant à l'extérieur, et dans lequel, lors du laminage, un masque (31) avec au moins un évidement (22) ou une partie découpée, par application de pression et/ou de chaleur, le film (2) sur le substrat, le film étant porté à une température proche de la température de fusion ou de ramollissement de la couche de film attenante au substrat. Il s'ensuit un écoulement visqueux du matériau formant les films et/ou du substrat dans la zone de l'évidement ou de la partie découpée, de sorte qu'un renflement de matière (11) se forme, et le film se bombant pour former un compartiment dans la zone de l'évidement.

29. Procédé selon la revendication 28, **caractérisé en ce qu'**une température de laminage de 70 °C à 350 °C, en particulier de 120 °C à 150 °C est mise en oeuvre.

30. Procédé selon l'une quelconque des revendications 28 ou 29, **caractérisé en ce que** le film (2) est appliqué sur le substrat (1) au moyen d'un masque en forme de tampon cylindrique.

31. Procédé selon l'une quelconque des revendications 28 ou 29, **caractérisé en ce que** le film est appliqué sur le substrat au moyen d'un masque en forme de dispositif de laminage à tampons.
